Europäisches Patentamt

European Patent Office

Office européen des brevets

(19)

(11) Publication number: **0 057 973**
A1

(12) EUROPEAN PATENT APPLICATION

(21) Application number: 82300093.0

(22) Date of filing: 08.01.82

(51) Int. Cl.³: **B 65 D 90/50**

(30) Priority: 09.01.81 CA 368169

(43) Date of publication of application:
18.08.82 Bulletin 82/33

(84) Designated Contracting States:
DE FR GB NL

(71) Applicant: Butts, Nicholas Ernest
215 Colonnade Road
South Nepean Ontario K2E 7K3(CA)

(72) Inventor: Butts, Nicholas Ernest
215 Colonnade Road
South Nepean Ontario K2E 7K3(CA)

(74) Representative: Jackson, Peter Arthur et al,
GILL JENNINGS & EVERY 53 to 64, Chancery Lane
London WC2A 1HN(GB)

(54) Method and device for the installation of a leak sensing device on a subterranean tank.

(57) A subterranean tank installation wherein a tank (10) and an adjacent leak sensing means (14) are enclosed in an impervious bag (11) which is sealed about the tank to prevent actuation of the leak sensing means other than owing to leakage from the tank.

FIG. I

TITLE MODIFIED
see front page

- 1 -

BUTTS, NICHOLAS ERNEST                    GJE 5081/196

## TANK INSTALLATION

The present invention is concerned with the detection of leaks in underground tanks, for example tanks used for storage of fuel or heating oil, and other petrochemicals. Many thousands of fuel storage tanks are located underground, for example in service stations, and leakage from these tanks is a continuing concern. Undetected leakage from such tanks is wasteful in the loss of a non-renewable energy source, and can also create hazards to public safety where leakage occurs over an extended period of time resulting in contamination of subsurface earth formation or ground water sources, or by leaking into storm sewers and creating an explosion hazard.

Frequently where new subterranean tanks are installed to replace failed tanks, the ground has already been contaminated by previous leakage or spillage of fluids, so that the installation of leak sensing devices adjacent the new storage tank will result in an erroneous indication of leakage. What is required is a leak detection system which is insensitive to contamination of the tank environment resulting from leakage not associated with the tank to be protected, and is similarly immune to spillage of petroleum products during refilling of the tank or when products are drawn from the tank during use.

All of the above criteria are met by the present invention according to which leakage from a subterranean tank is detected by providing the tank with a leakage sensor positioned adjacent to the tank and enclosing the sensor together with the tank in an impervious bag which is sealed to prevent spillage or soil contamination from causing erroneous leak indication to be generated.

In one aspect, the present invention provides a method of providing an installation of a subterranean tank containing a liquid product, e.g. a petroleum product such as gasoline or heating oil, the method comprising providing leak sensing means of the type that has a material that is subject to degradation by the liquid product positioned adjacent to a tank, enclosing the leak sensing means and the tank together in a bag impervious to the product, sealing the bag to prevent the ingress of the product due to accidental spillage, or from other sources of the product, and connecting the leak sensing means to means for providing a signal whereby leakage from the tank into the bag will be detected by the leak sensing means.

In another aspect, the invention provides a tank installation comprising a subterranean tank provided with a leak sensing means positioned adjacent to the tank; characterized by an impervious bag enclosing the tank and the leak sensing means, the bag being sealed to prevent spilled products or leakage in the soil from causing the leak sensor to give a false output indicating a leak.

Preferably, the leak sensing means is installed in a perforated duct within the bag. Leakage from the tank will then penetrate the duct, and be detected by the leak sensor. The perforated duct thus provides access to the leak detection cable.

The leak sensing means may be an electrical leak detecting cable of the type that has an insulator that is subject to degradation by a petroleum product. Alternatively the leak sensing means may be of the type in which an air-filled sealed tube is formed of a material which is subject to destruction by a petroleum product, and the tube is connected to a compressed air system such that a loss of air pressure indicates the presence of a leak.

A suitable bag may be made from a reinforced oil-impervious plastics material.

In drawings which illustrate an installation an in accordance with the present invention;

Figure 1 is a vertical longitudinal section through a cylindrical subterranean tank;

Figure 2 is a transverse vertical section through the tank; and,

Figure 3 is a detailed view of the filler pipe for the tank.

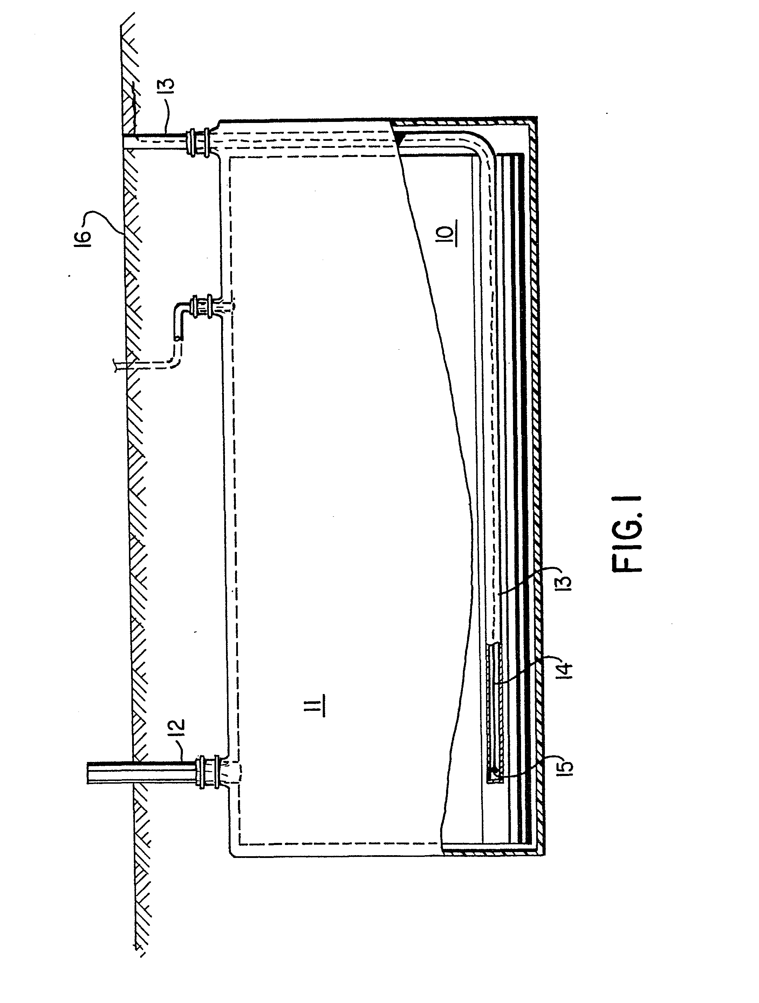

Figure 1 shows a tank 10 which is sealed within a bag 11, and extending through the seal is a fill pipe 12 and a leak detection duct 13. Located within the duct 13 is a leak sensor cable 14 terminated with a resistor 15. The entire installation is below ground level 16.

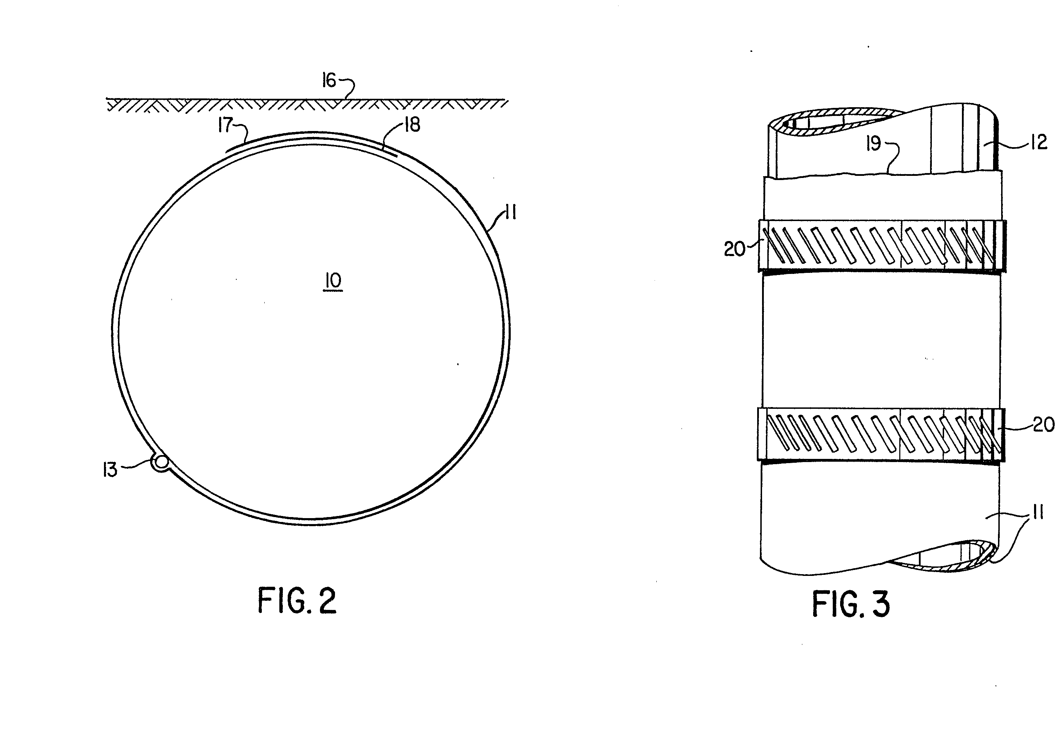

In order to seal the tank 10, and duct 13 in the bag 11 and as illustrated more clearly in Figure 2, the ends or flaps 17 and 18 of the bag 11 are folded over and may be sealed together with a suitable sealant to complete the installation of the bag. It is preferable to remove trapped air from the bag during installation such as by use of a vacuum cleaner, as is usually done, for example, with vinyl swimming pool liners.

Figure 3 illustrates one way in which the bag 11 may be sealed to the filler pipe 12. As illustrated the bag 11 is drawn up around the filler pipe 12 to a point 19, and screw clamps 20 may be used together with a suitable sealer to complete the sealing of the bag 11 about the filler pipe 12.

A principal advantage of the invention is that it is possible to use a bare steel tank in an underground location without premature failure of the tank due to corrosion. Such bare steel tank is the least expensive container for storing fuels, but has not been used because of leakage caused by corrosion. The tank 10, being entirely sealed in the bag 11, is completely isolated from any of the corrosive effects due to its environment. One form of particularly suitable bag material is made from a nylon reinforced vinyl material sold under the trade mark HERCULITE. This is a strong inert material, totally unaffected by petroleum products, and may be seamed by sewing, by the use of adhesives or by electronic welding. Sewn seams may of course be waterproofed as taught by the supplier of the HERCULITE brand fabrics, Herculite-Protective Fabrics Corporation, New York, N.Y. 10010, U.S.A. A suitable adhesive for joining such fabrics is available from the same supplier, and is sold under the trade mark CVV.

In normal use, all metallic connections to the bare steel tank must be made with electrical insulating insolators in each connection. Such isolates are commonly in use at the present time with known fuel storage tanks. The material used for the bag must also be an electrical insulator.

The leak detection duct 13 can be formed for example from four inch diameter perforated PVC weeping tile pipe with a nylon silt jacket on the outside. After installation the bag is sealed around the top of the tank and all piping including the leak detection duct, so that no spills will find their way into the space between the tank and the bag. Any product then getting into this space must come from the tank where its presence will activate the sensor cable alerting the responsible person that the tank has developed a leak.

Many advantages are realized using the system. First of all a 24 hour a day 365 day watch is maintained on the integrity of the tank and there is no need for independent test or other special procedures such as have been proposed and are presently in use in association with underground fuel storage tanks. Because the tank is isolated from the soil by the insulated bag there is no need for cathodic protection or other steps or measures to reduce or prevent corrosion. An economical solution to the problem of fuel storage and leaf detection is thus provided.

The use of the duct containing the sensor cable also provides a significant further advantage. Should the petroleum product for any unforeseen reason other than by a leakget into the space between the tank and the bag it would be quite simple to circulate water through the duct and flush out the product and replace the sensor cable.

There is no question that large spills could of course cause false alarms in the leak detection system, but the judicial placing of ducts away from filler caps and suitable protecting the filler cap area to ensure that the small spills which occurs at filling do not percolate into the soil will virtually eliminate this source of false leak signals.

The system also provides the further advantage that, in the event of a leak, the liner is capable of retaining the leak and avoiding unnecessary contamination of the surrounding ground. The bag retains all of the lost product within its walls so that it may be removed safely and without contamination of the product or of the surrounding area. Underground storage tanks can thus be maintained in a controlled environment free from moisture and harmful chemicals in the surrounding ground. By controlling the pH and moisture in the bag containing the tank corrosion of tanks can be kept to a minimum. This it is no longer necessary to use expensive fibre glass storage tanks which are vulnerable to solvents in the ground water.

The material used for the bag is strong, water and oil resistant, and can be formed in suitable shapes to contain conventional commercial sizes and shapes of underground storage tanks. The bag may be premanufactured to shape with the ends, sides and bottom sealed to form the bag with the top left open ready to be sealed on the site. In a typical installation, the site excavation is dug in the normal manner with a six inch layer of compacted sand placed on the bottom. After the bottom has been formed, the bag is then placed in the ground in the fashion similar to placing a swimming pool liner. The tank may then be placed in the bag.

After the tank 10 has been placed in the bag the sensor duct is then put in place. Using a sensor duct consisting of four inch perforated PVC weeping tile with a nylon silt jacket on the outside this installation can be done with a minimum of difficulty. The leak detection duct 13 may be laid in the form of a letter L or U with the vertical end(s) rising to the ground level 16 while the horizontal run along the bottom right on the liner material.

After the tank 10 and the leak detection duct have been installed within the bag 11 the bag can be closed, any excess air can be removed using a vacuum, and the bag 11 sealed around the tank. Prior to sealing it is also possible to add chemicals in the bottom of the bag to protect the steel storage tank to inhibit corrosion.

As back-filling of the bag 11 occurs, the top flaps 17 and 18 are folded over and the bag 11 sealed. When the top flaps are sealed, holes are cut for fill pipes, vent pipes and pump pipes. Special sleeves may be made for these pipes and bonded to the bag, so that all connection are protected to the ground surface as illustrated in Figure 3. These sleeves may be clamped with a screw clamp 20 approximately six inches below the ground level 16, filled with silicon grease and then sealed with a second clamp as illustrated in Figure 3.

After sealing the upper end of the top flap 17, the bag 11 should be completely sealed so that no moisture is able to get into the liner where it is able to affect the tank 10.

Where the leak detection duct 13 comes to ground level 16 a man-hole (not shown) may be placed so that it will be slightly below final grade and not affected by any surface equipment such as snowplows.

Within the leak detection duct 13 the sensor cable 14 is installed. Such sensor may be either a gas detector or a sensor cable. A suitable form of cable is that sold by Leak X Detection Devices Limited of Ottawa, Canada, as Linear system and as disclosed in Canadian Patent Specifications Nos. 775,758 and 978,614. Alternatively the leak sensor may be a small diameter tube made of a similar material to the insulation on the LEAK-X cable, which material is under air-pressure. The tube is degradable similarly to the insulation of the LEAK-X cable leading to a loss of air pressure which can actuate a sensor to indicate a leak. A further alternative would be the use of a gas sensor head or sniffer installed in the duct and wired to an alarm.

It would also be possible to preassemble the bag, duct, sensor, and tank and to factory seal the preassembled unit, which may then be installed in a suitable excavation, and connected to filler pipes and leak detection monitors.

Many advantages are obtained in the use of a system of the present invention.

1.    The tank is now in a moisture and chemical free controlled environment.

2.    Leak detection is fast and accurate.

3.    Leak detection is not vulnerable to spills or existing contamination in the surrounding ground.

4.    Leaks are retained so that expensive clean-up spills can be avoided.

5.    Leak clean-up is fast, easy and thorough.

6.    Leaking tanks can be accurately identified.

7.    Old steel tanks can be reclaimed and used again since corrosion can now be controlled.  This makes retrofitting older gas stations for example a feasible solution because their tanks will probably not require changing but can merely be excavated, fitted with a bag duct and sensor and reinstalled.  Additionally all fittings and piping are enclosed in the bag so that these can be monitored for leaks also.

It is estimated that the cost of installing the applicant's leak detection system would add about 30% to the cost of a basic installation of a bare steel tank. As against this however is the fact that a bare steel tank would be subject to corrosion depending upon the nature of the soil in which it is buried, and it is not equipped with any adequate means for detecting leakage except by use of conventional inventory control practices. However the savings involved in early leak detection together with the extended life of the tank clearly indicates that the cost of the applicant's improved leak detection system should be recaptured during the life of the tank.

- 9 -

## CLAIMS

1.    A method of providing an installation of a subterranean tank (10) containing a liquid product, the method  comprising providing leak sensing means (14) of the type that has a material that is subject to degradation by the liquid product positioned adjacent to a tank, enclosing the leak sensing means and the tank together in a bag (11) impervious to the product, sealing the bag to prevent the ingress of the product due to accidental spillage, or from other sources of the product, and connecting the leak sensing means to means for providing a signal whereby leakage from the tank into the bag will be detected by the leak sensing means.

2.    A method according to claim 1, wherein air trapped in the bag is removed by vacuum prior to sealing the bag.

3.    A tank installation comprising a subterranean tank (10) provided with a leak sensing means (14) positioned adjacent to the tank; characterised by an impervious bag (11) enclosing the tank and the leak sensing means, the bag being sealed to prevent spilled products or leakage in the soil from causing the leak sensor to give a false output indicating a leak.

4.    An installation according to claim 3, wherein the leak sensing means is installed in a perforated duct (13) within the bag.

5.    An installation according to claim 3 or claim 4, wherein the leak sensing means is an electrical leak detecting cable (14) of the type that has an insulator

0057973

- 10 -

that is subject to degradation by a petroleum product.

6. An installation according to claim 3 or claim 4, wherein the leak sensing means may be of the type in which an air-filled sealed tube is formed of a material which is subject to destruction by a petroleum product, and the tube is connected to a compressed air system such that a loss of air pressure indicates the presence of a leak.

7. An installation according to any one of claims 3 to 6, wherein the bag is formed of nylon reinforced vinyl material.

8. An installation according to any one of claims 3 to 6, wherein the bag is formed of a reinforced oil-impervious plastics material.

9. An installation according to any one of claims 3 to 8, wherein the bag contains chemical corrosion inhibitors.

10. An installation according to any one of claims 3 to 9, wherein the tank is a bare steel tank.

FIG. I

FIG. 2

FIG. 3

0057973

**European Patent Office**

**EUROPEAN SEARCH REPORT**

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US - A - 3 995 472 (MURRAY)<br><br>* column 1, line 49 to column 2, line 63 * | 1,3,<br>6,8 | B 65 D 90/50 |
| X | CH - A - 411 633 (KUGLER)<br><br>* page 2, lines 24-58 * | 1,2,<br>3,5 | |
| A | FR - A - 1 585 645 (LEHMANN)<br><br>* résumé 1,13,14,19,21;<br>page 2, line 18 to page 3,<br>line 8; figures * | 1,3,<br>8,9,<br>10 | TECHNICAL FIELDS SEARCHED (Int.Cl 3)<br><br>B 65 D<br>G 01 M |
| A | DE - A - 2 329 525 (MANNESMANN)<br><br>* claim 1; page 2, lines 16-31 * | 4,6 | |
| A | CH - A - 533 556 (SCHAERER)<br><br>* column 2, lines 14-43;<br>figures * | 1,3,<br>10 | |
| A | DE - B - 1 150 248 (NICOLAI)<br><br>-------- | | |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| THE HAGUE | 07-04-1982 | VAN ROLLEGHEM |

EPO Form 1503.1  06.78